(19) Europäisches Patentamt / European Patent Office / Office européen des brevets

(11) **EP 4 374 150 B1**

(12) **EUROPÄISCHE PATENTSCHRIFT**

(45) Veröffentlichungstag und Bekanntmachung des Hinweises auf die Patenterteilung:
**17.12.2025   Patentblatt 2025/51**

(21) Anmeldenummer: **22743829.8**

(22) Anmeldetag: **13.07.2022**

(51) Internationale Patentklassifikation (IPC):
**G01M 3/28** *(2006.01)*

(52) Gemeinsame Patentklassifikation (CPC):
**G01M 3/2876**

(86) Internationale Anmeldenummer:
**PCT/EP2022/069677**

(87) Internationale Veröffentlichungsnummer:
**WO 2023/001675 (26.01.2023 Gazette 2023/04)**

(54) **VERFAHREN UND VORRICHTUNGEN ZUM ERKENNNEN VON AUSGANGSSEITIGEN LECKAGEN BEI EINEM DOPPELKEGEL-LUFTLEISTUNGSVERSTÄRKER**

METHOD AND DEVICES FOR DETECTING LEAKS AT THE OUTLET IN A DOUBLE-CONE AIR POWER BOOSTER

PROCÉDÉ ET DISPOSITIFS DE DÉTECTION DE FUITES AU NIVEAU DE LA SORTIE DANS UN SURPRESSEUR D'AIR À DOUBLE CÔNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.07.2021   DE 102021118552**

(43) Veröffentlichungstag der Anmeldung:
**29.05.2024   Patentblatt 2024/22**

(73) Patentinhaber: **Samson Aktiengesellschaft**
**60314 Frankfurt am Main (DE)**

(72) Erfinder:
• **FIEBIGER, Christian**
  **65719 Hofheim am Taunua (DE)**
• **FISCHER, Marco**
  **60599 Frankfurt am Main (DE)**
• **STEIN, Thomas**
  **60596 Frankfurt am Main (DE)**

(74) Vertreter: **noventive Patentanwaltsgesellschaft mbH**
**Riesstraße 16**
**80992 München (DE)**

(56) Entgegenhaltungen:
DE-A1- 3 708 471      DE-A1- 3 741 364
JP-A- S55 115 603

## Beschreibung

Gebiet der Erfindung

Die Erfindung betrifft ein Verfahren zum Erkennen von ausgangsseitigen Leckagen bei einem Doppelkegel-Luftleistungsverstärker, sowie entsprechende Systeme und/oder Vorrichtungen. Die vorgenannten Luftleistungsverstärker werden vielfach zur geregelten Druckluftversorgung pneumatischer Antriebe von Prozess-Stellventilen, oder auch anderer Druckluft-Verbraucher, genutzt.

An solche Stellventile werden immer höhere Anforderungen bezüglich ihrer Fähigkeiten, Veränderungen und insbesondere Verschlechterungen ihrer Betriebszustände zu erkennen, gestellt. Dazu zählen beispielsweise auch Hinweise auf Leckagen im Pneumatiksystem. Diese können auf längere Sicht nämlich erhebliche Kosten verursachen und sogar die Sicherheit beeinträchtigen, da z.B. bestimmte Ventilpositionen ggf. nicht mehr angefahren werden können. Auch können sie zu erhöhter Geräuschentwicklung führen.

Stand der Technik

Ein elektropneumatisches Steuerungssystem, das eine sekundäre pneumatische Leistungsstufe umfasst, ist beispielsweise in EP 1 769 159 B1 dargestellt. Dabei kommt z.B. ein Doppelkegel-Luftleistungsverstärker zum Einsatz. Diagnosemöglichkeiten, welche das Druckluftsystem und insbesondere Leckagen desselben betreffen, sind nicht vorgesehen.

Ein pneumatischer Verstärker, der als Doppelkegel-Luftleistungsverstärker ausgebildet ist, wird beispielsweise in der Veröffentlichung DE 37 41 364 A1 beschrieben. Auch hier sind keine Diagnosemöglichkeiten beschrieben.

Aus der Veröffentlichung WO 2018/035181 A1 sind Verfahren und Vorrichtungen zum Prüfen pneumatischer Signalverstärker während des laufenden Betriebs bekannt. Hierdurch können beispielsweise Aussagen über die grundsätzliche Funktionsfähigkeit dieser Geräte gewonnen werden. Aussagen über Leckagen im Druckluftsystem können durch die dort geschilderten Verfahren bzw. Vorrichtungen jedoch nicht gewonnen werden.

Ein Leckagedetektionssystem wird in US 4,157,656 A beschrieben. Dieses erfordert jedoch den Einsatz zusätzlicher Geräte, die ihrerseits einen pneumatischen Verstärker benötigen, um das Ausgabesignal derart zu verstärken, dass es in möglichst eindeutiger Weise von normalen Schwankungen unterschieden werden kann.

Die Druckschrift US 2003/0208305 A1 beschreibt ein Verfahren zur Diagnose eines pneumatischen Regelkreises eines Stellventils. Dies beinhaltet das Erkennen von ausgangsseitigen Leckagen bei einem im Regelkreis angeordneten Luftleistungsverstärker. Zu diesem Zweck werden ein Steuersignal und der Ausgangsdruck des Luftleistungsverstärkers aufgenommen. Durch Vergleich mit einem berechneten Massenfluss wird ggf. auf eine Leckage geschlossen.

Die Veröffentlichung JPS55115603A beschreibt ein System das einen Fluidverstärker umfasst, und befasst sich mit der Kompensation von Druckabfällen, die durch eine Leckage bedingt sind.

Aufgabe

Aufgabe der Erfindung ist es, ein möglichst unkompliziertes Verfahren sowie System anzugeben, das Leckagen bei nachgeschalteten Verbrauchern eines Doppelkegel-Luftleistungsverstärkers erkennt.

Lösung

Diese Aufgabe wird durch den Gegenstand des unabhängigen Anspruchs gelöst. Vorteilhafte Weiterbildungen des Gegenstands des unabhängigen Anspruchs sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Im Folgenden werden einzelne Verfahrensschritte näher beschrieben. Die Schritte werden in einer bevorzugten Variante der Erfindung in der angegebenen Reihenfolge ausgeführt. Die Schritte müssen aber nicht notwendigerweise in der angegebenen Reihenfolge durchgeführt werden, und das zu schildernde Verfahren kann auch weitere, nicht genannte Schritte aufweisen.

Zur Lösung der Aufgabe wird ein Verfahren zum Erkennen von ausgangsseitigen Leckagen bei einem Doppelkegel-Luftleistungsverstärker vorgeschlagen. Das Verfahren weist die folgenden Schritte auf: Initial wird eine Referenzkurve aufgenommen, die eine Eingangsgröße mit einer Ausgangsgröße in Relation setzt. Die Eingangsgröße ist eine Größe, die einen Ausgangsdruck des Doppelkegel-Luftleistungsverstärkers steuert, z.B. der Steuerdruck des Luftleistungsverstärkers, oder auch eine Stromstärke, falls ein I/P-Wandler vorgeschaltet ist. Die Ausgangsgröße ist der Ausgangsdruck des Doppelkegel-Luftleistungsverstärkers oder eine von dem Ausgangsdruck gesteuerte oder abgeleitete Größe, z.B. die Position des Ventilglieds, wenn der Luftleistungsverstärker einen pneumatischen Ventilantrieb mit Druckluft versorgt.

Im laufenden Betrieb wird dann mindestens ein stationärer Zustand ermittelt. Dabei werden nur stationäre Zustände betrachtet, denen ein Absinken des Ausgangsdrucks des Doppelkegel-Luftleistungsverstärkers vorausgegangen ist. Der Luftleistungsverstärker und/oder ihm ggf. vorgeschaltete Elemente befinden sich somit noch im Abluftbetrieb. Werte der Eingangsgröße und der Ausgangsgröße, die zu dem stationären Zustand gehören, werden ermittelt und mit der Referenzkurve verglichen. Wenn der zur ermittelten Ausgangsgröße korrespondierende Ausgangsdruck um eine vorgegebene Toleranz kleiner ist als der gemäß der Referenzkurve für die ermittelte Eingangsgröße zu erwartende Ausgangsdruck, wird eine ausgangsseitige Leckage festgestellt. Dies ist äquivalent dazu, dass zu dem Ausgangsdruck, der zu einer ermittelten Ausgangsgröße korrespondiert, eine Eingangsgröße ermittelt wird, die um eine äquivalente vorgegebene Toleranz höher liegt, als gemäß der Referenzkurve zu erwarten wäre.

Unter ausgangsseitigen Leckagen sind dabei Leckagen auf der Ausgangsseite des Luftleistungsverstärkers zu verstehen, das heißt Leckagen in nachgelagerten bzw. nachgeschalteten bzw. stromabwärts gelegenen Leitungen bzw. Druckluft-Verbrauchern.

Mit diesem Verfahren lassen sich ausgangsseitige Leckagen bei einem Doppelkegel-Luftleistungsverstärker in unkomplizierter Weise, insbesondere ohne zusätzliche Komponenten, ermitteln. Dadurch können frühzeitig Hinweise zu einer ggf. notwendigen Wartung erhalten werden, wodurch Kosten für zu spät erkannte Wartungserfordernisse gespart werden können.

Werden etwaige Leckagen frühzeitig erkannt, reduzieren sich zusätzlich die Kosten für die Drucklufterzeugung. Extrem wichtig ist auch zu erkennen, ob bestimmte Ventilstellungen aufgrund des Druckverlusts infolge der Leckage nicht mehr angefahren werden können. Die Konsequenzen können sicherheitsrelevant sein oder das Endprodukt beeinträchtigen. Dies kann mit dem beschriebenen Verfahren verhindert oder frühzeitig erkannt werden.

Ein aussagekräftigeres Ergebnis wird dadurch erreicht, dass eine Mehrzahl von stationären Zuständen ermittelt wird. Für jeden dieser Mehrzahl von stationären Zuständen werden Werte der Eingangsgröße und der Ausgangsgröße, die zu dem stationären Zustand gehören, ermittelt. Alle diese ermittelten Werte werden mit der Referenzkurve verglichen. Dies kann verhindern, dass sogenannte "Ausreißer" irrtümliche Leckage-Meldungen verursachen.

Die Sicherheit der Leckage-Erkennung wird erhöht, wenn eine ausgangsseitige Leckage dann festgestellt wird, wenn während einer vorgegebenen Messzeit alle zu den ermittelten Ausgangsgrößen korrespondierenden Ausgangsdrücke um eine vorgegebene Toleranz kleiner sind als die gemäß der Referenzkurve für die ermittelten Eingangsgrößen zu erwartenden Ausgangsdrücke. Dies sorgt dafür, dass keine Leckage festgestellt wird, wenn mindestens ein während der vorgegebenen Messzeit ermittelter Wert innerhalb der Toleranz mit der Referenzkurve übereinstimmt. Irrtümliche Meldungen werden auf diese Weise deutlich seltener.

Die Sicherheit der Leckage-Erkennung wird ebenso erhöht, wenn eine ausgangsseitige Leckage dann festgestellt wird, wenn für eine vorgegebene Anzahl zuletzt ermittelter Ausgangsgrößen die zu den ermittelten Ausgangsgrößen korrespondierenden Ausgangsdrücke um eine vorgegebene Toleranz kleiner sind als die gemäß der Referenzkurve für die ermittelten Eingangsgrößen zu erwartenden Ausgangsdrücke. Auch auf diese Weise lassen sich irrtümliche Meldungen effektiv unterdrücken. Diese Vorgehensweise ist zu bevorzugen, wenn aufgrund der Betriebssituation geeignete stationäre Zustände nur kurz andauern. Dann könnte nicht immer gewährleistet werden, dass eine für eine ordentliche Statistik ausreichende Anzahl von Werten in einer vorgegebenen Messzeit ermittelt werden kann, so dass es vorteilhafter ist, die Anzahl dieser Werte vorzugeben und nicht die Zeit, in der sie ermittelt werden.

Zur weiteren Auswertung und Dokumentation ist es von Vorteil, wenn das Verfahren den weiteren Schritt des Erstellens eines Datenträgers (flüchtig oder permanent), auf dem die ermittelten Werte und/oder Ergebnisse und/oder die Referenzkurve gespeichert sind, aufweist.

Die Aufgabe wird ferner gelöst durch eine Vorrichtung, welche eingerichtet ist, das Verfahren, wie es bereits beschrieben wurde, durchzuführen.

Die Aufgabe wird außerdem gelöst durch ein System zum Erkennen von ausgangsseitigen Leckagen bei einem Doppelkegel-Luftleistungsverstärker. Dieses System umfasst einen Doppelkegel-Luftleistungsverstärker und eine Steuerung und/oder Regelung zum Steuern und/oder Regeln einer Eingangsgröße des Doppelkegel-Luftleistungsverstärkers, wobei die Eingangsgröße eine Größe ist, die einen Ausgangsdruck des Doppelkegel-Luftleistungsverstärkers steuert. Das System hat ferner Mittel zum Ermitteln eines stationären Zustands und Mittel zum Aufnehmen der Eingangsgröße und einer Ausgangsgröße, wobei die Ausgangsgröße der Ausgangsdruck des Doppelkegel-Luftleistungsverstärkers oder eine von dem Ausgangsdruck gesteuerte oder abgeleitete Größe ist. Das System hat außerdem Mittel zum Aufnehmen einer Referenzkurve, die die Eingangsgröße mit der Ausgangsgröße in Relation setzt, Mittel zum Vergleichen aufgenommener Werte mit der Referenzkurve sowie Mittel, die eingerichtet sind, die Schritte eines Verfahrens, wie es weiter oben beschrieben wurde, auszuführen.

Wenn das System einen I/P-Wandler umfasst, kann die Eingangsgröße eine elektrische Stromstärke sein, was in Bezug auf die Steuerung und/oder Regelung des Doppelkegel-Luftleistungsverstärkers sowie die Erfassung und Auswertung der Daten vorteilhaft ist. Der I/P-Wandler stellt einen Steuerdruck für den Doppelkegel-Luftleistungsverstärker bereit. Die Eingangsgröße ist dabei die durch den I/P-Wandler fließende Stromstärke.

Besonders günstig ist es, wenn bei dem vorgenannten System der I/P-Wandler nach dem Düse-Prallplatte-Prinzip aufgebaut ist. Ein solcher I/P-Wandler weist aufgrund seiner elektromagnetischen Komponenten ein Hysterese-Verhalten auf. Dieses Verhalten überlagert sich mit dem hystereseartigen Verhalten des Doppelkegel-Luftleistungsverstärkers beim Übergang zwischen Zuluft- und Abluftbetrieb, wodurch die Form der Referenzkurve bzw. Kennlinie ausgeprägter ausfällt. Insbesondere unterscheiden sich Zuluft- und Abluft-Kurve stärker.

Die Aufgabe wird des Weiteren gelöst durch einen Stellungsregler für ein pneumatisch angetriebenes Stellventil mit einem System, wie es oben beschrieben wurde.

Die Aufgabe wird außerdem gelöst durch ein pneumatisch angetriebenes Stellventil mit einem vorgenannten Stellungsregler, und auch durch eine prozesstechnische Anlage mit mindestens einem vorgenannten pneumatisch angetriebenen Stellventil.

Die Aufgabe wird zudem gelöst durch ein Computerprogramm, z.B. als Teil einer sog. Firmware, umfassend Befehle, die bewirken, dass die oben genannte Vorrichtung oder das oben beschriebene System oder der oben genannte Stellungsregler die weiter oben beschriebenen Verfahrensschritte ausführt.

Die Aufgabe wird schließlich gelöst durch ein computerlesbares Medium, auf dem das vorgenannte Computerprogramm gespeichert ist.

Weitere Einzelheiten und Merkmale ergeben sich aus der nachfolgenden Beschreibung eines bevorzugten Ausführungsbeispiels in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf das Ausführungsbeispiel beschränkt. So umfassen beispielsweise Bereichsangaben stets alle - nicht genannten - Zwischenwerte und alle denkbaren Teilintervalle.

Ein Ausführungsbeispiel ist in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

Fig. 1    eine schematische Schnittansicht durch einen Doppelkegel-Luftleistungsverstärker mit Zusatzfeder im Haltebetrieb (Stand der Technik);

Fig. 2    eine schematische Schnittansicht durch einen Doppelkegel-Luftleistungsverstärker ohne Zusatzfeder im Zuluftbetrieb (Stand der Technik);

Fig. 3    eine schematische Schnittansicht durch einen Doppelkegel-Luftleistungsverstärker ohne Zusatzfeder im Abluftbetrieb (Stand der Technik);

Fig. 4    eine Darstellung des Druckverlaufs und des Leckagestroms bei einer Testfunktion bei verschiedenen Leckagen;

Fig. 5    I-P-Kennlinien eines Luftleistungsverstärkers mit vorgeschaltetem I/P-Wandler bei verschiedenen Leckagen;

Fig. 6A    einen zeitlichen Verlauf des Ausgangsdrucks während einer simulierten Betriebssituation;

Fig. 6B    den zugehörigen zeitlichen Verlauf der Ableitung des Ausgangsdrucks; und

Fig. 7    ermittelte stationärer Zustände im Vergleich zu den I-P-Kennlinien aus Fig. 5.

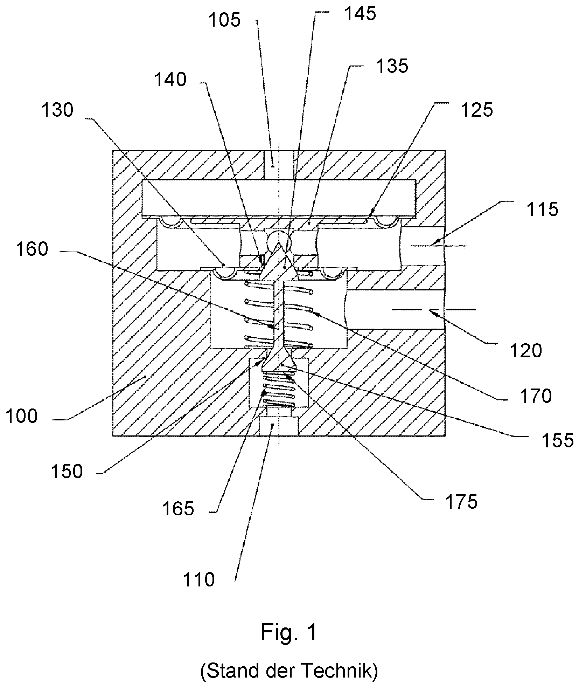

Zunächst soll anhand der Figuren 1 bis 3 die Funktionsweise eines Doppelkegel-Luftleistungsverstärkers erklärt werden. Hierbei handelt es sich um Stand der Technik, der nicht beansprucht wird, aber zum besseren Verständnis erläutert werden muss.

Fig. 1 zeigt den Aufbau eines Doppelkegel-Luftleistungsverstärkers 100. Dieser hat einen Steuereingang 105 für den Steuerdruck $P_{st}$, einen Zulufteingang 110, der mit Druckluft mit dem Druck $P_z$ versorgt wird, einen Entlüftungsausgang 115, der zur Umgebung hin offen ist, und einen Ausgang 120 für Druckluft mit dem gewünschten Ausgangsdruck $P_a$.

Zwischen dem Steuereingang 105 und dem Entlüftungsausgang 115 befindet sich eine erste Membran 125 mit der Wirkfläche $A_o$, und zwischen dem Entlüftungsausgang 115 und dem Ausgang 120 befindet sich eine zweite Membran 130 mit der Wirkfläche $A_u$. Die Wirkfläche der jeweiligen Membran wird ungefähr durch die Mitte der Wülste der Membran begrenzt. Diese beiden Membranen sind durch einen Steuerkörper 135 verbunden, so dass sie sich gemeinsam bewegen. Der Steuerkörper 135 enthält in seiner Mitte den Abluftsitz 140, der durch den Abluftkegel 145 verschlossen bzw. freigegeben wird.

Zwischen Zulufteingang 110 und Ausgang 120 befindet sich der Zuluftsitz 150 mit der Querschnittsfläche $A_z$, der durch den Zuluftkegel 155 verschlossen bzw. freigegeben wird. Zuluft- und Abluftkegel 155, 145 sind fest miteinander verbunden, so dass sie sich stets gemeinsam bewegen, und bilden zusammen den Doppelkegel 160. Dieser kann mittels einer Zusatzfeder 165 vorgespannt sein, dies ist aber nicht unbedingt erforderlich.

Außerdem ist noch eine Offsetfeder 170 vorhanden, welche den Steuerkörper 135 und die beiden Membranen 125, 130 in Fig. 1 nach oben drückt und dafür sorgt, dass der Luftleistungsverstärker erst ab einem gewissen minimalen Steuerdruck, der die Kraft der Offsetfeder 170 überwindet, zu arbeiten beginnt. Die Offsetfeder 170 unterstützt auch ein sicheres Entlüften für den Fall, dass das Vorsteuersystem, welches den Steuerdruck liefert, nicht vollständig entlüften kann (dies ist z.B. bei konventionellen Düse-Prallplatte IP-Wandlern häufig der Fall). Ferner ist noch die untere Wirkfläche 175 des Doppelkegels zu erkennen. Deren Bedeutung wird weiter unten erläutert.

In Fig. 1 ist der Luftleistungsverstärker im Haltebetrieb dargestellt. Das bedeutet, dass Steuerdruck $P_{st}$ und Ausgangsdruck $P_a$ genau so groß sind, dass die erste und zweite Membran 125, 130 sowie der sie verbindende Steuerkörper 135 sich in einer mittleren Position befinden, in der sowohl der Zuluftsitz 150 als auch der Abluftsitz 140 durch den Doppelkegel 160 verschlossen sind. Deshalb liegt keine Fluidverbindung zwischen dem Ausgang 120 und dem Zulufteingang 110 oder dem Entlüftungsausgang 115 vor, so dass der Ausgangsdruck $P_a$ gehalten wird. In der Praxis ist dieser Zustand (Haltebetrieb) selten von Bedeutung, da pneumatische Verbraucher immer eine gewisse Grundleckage aufweisen und ein geregelter Luftleistungsverstärker somit zum Halten eines Zustands des Verbrauchers auf Dauer in den Zuluftbetrieb gehen muss.

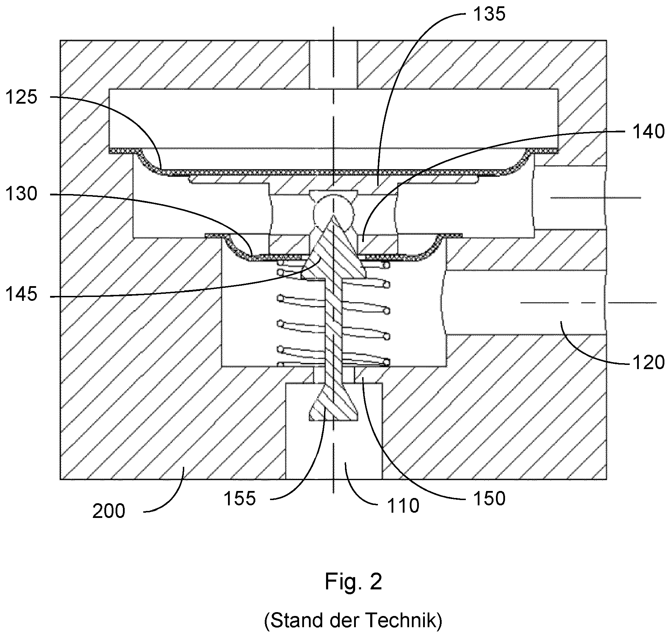

In Fig. 2 ist ein Doppelkegel-Luftleistungsverstärker 200 dargestellt, der sich von dem aus Fig. 1 lediglich durch das Fehlen der Zusatzfeder 165 unterscheidet. In Fig. 2 befindet sich der Luftleistungsverstärker im Zuluftbetrieb. Der Steuerdruck $P_{st}$ ist erhöht, der Ausgangsdruck $P_a$ aber noch nicht, weshalb die beiden Membranen 125, 130 sowie der Steuerkörper 135 nach unten gedrückt werden. Deshalb bleibt der Abluftsitz 140 durch den Abluftkegel 145 verschlossen, der Zuluftkegel 155 wird aber nach unten aus dem Zuluftsitz 150 gedrückt, so dass Druckluft vom Zulufteingang 110 nachströmen kann und den Ausgangsdruck $P_a$ am Ausgang 120 erhöht.

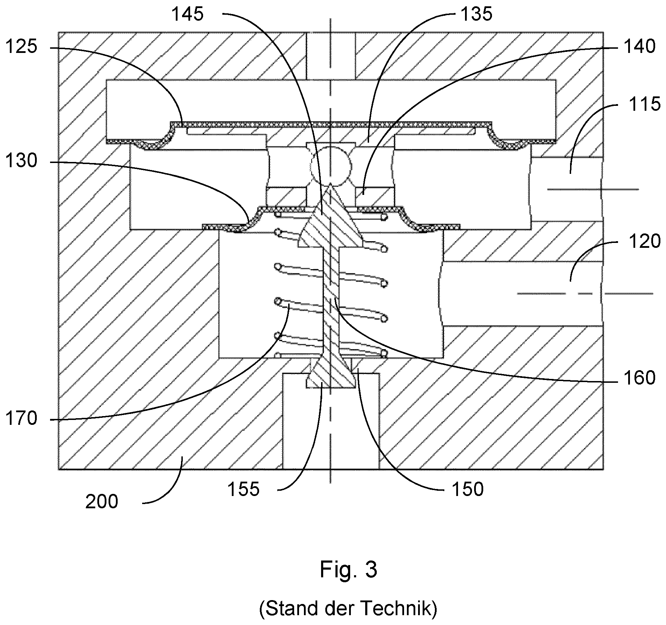

Fig. 3 zeigt denselben Doppelkegel-Luftleistungsverstärker 200 wie Fig. 2, allerdings im Abluftbetrieb. Der Steuerdruck $P_{st}$ ist abgesenkt, so dass die Offsetfeder 170 und der Ausgangsdruck $P_a$, unter dem sich die Druckluft im Verbraucher befindet, die beiden Membranen 125, 130 und den Steuerkörper 135 nach oben drücken. Deshalb wird der Zuluftsitz 150 durch den Zuluftkegel 155 verschlossen, der Abluftsitz 140 durch den Abluftkegel 145 aber freigegeben, da der Abluftsitz 140 mit angehoben wird, der Abluftkegel 145 als Teil des Doppelkegels 160 aber nicht folgen kann, da er mit dem Zuluftkegel 155 verbunden ist. In der Folge entweicht Druckluft aus dem Verbraucher durch den Abluftausgang 115, so dass der am Ausgang 120 anliegende Ausgangsdruck $P_a$ sinkt.

Durch Variation des Steuerdrucks $P_{st}$ kann der Ausgangsdruck $P_a$ auf jeden beliebigen Wert zwischen dem Umgebungsdruck und dem Zuluftdruck $P_z$ gebracht werden.

Im ausgeregelten Zustand des Doppelkegel-Luftleistungsverstärkers gilt für den Steuerkörper 135 ein Kräftegleichgewicht. Ohne Berücksichtigung weiterer Kräfte gilt:

$$P_{st} * A_o = P_a * A_u$$

Für eine genauere Beschreibung muss zusätzlich die Kraft $F_z$ einer Zusatzfeder (falls vorhanden) sowie die effektive Kraft auf die untere Wirkfläche des Doppelkegels 160 $A_z$, welche dem Querschnitt des Zuluftsitzes 150 entspricht, berücksichtigt werden, allerdings nur im Zuluftbetrieb. Im Abluftbetrieb stützen sich diese Kräfte über den Zuluftsitz 150 auf das Gehäuse ab und werden von diesem aufgenommen. Die Kraft $F_{offset}$ der Offsetfeder 170 muss hingegen immer berücksichtigt werden. Es ergeben sich folglich unterschiedliche Kräftegleichgewichte für den Zuluft- und den Abluftbetrieb:

Zuluftbetrieb:

$$P_a * A_u + F_{offset} + P_z * A_z + F_z = P_{st} * A_o$$

Abluftbetrieb:

$$P_a * A_u + F_{offset} = P_{st} * A_o$$

Dabei werden die Federkräfte $F_z$ und $F_{offset}$ in erster Näherung als konstant angenommen, da sich der Doppelkegel 160 und der Steuerkörper 135 typischerweise nur über geringe Distanzen bewegen.

Für den Ausgangsdruck gilt somit:

im Zuluftbetrieb:

$$P_a = \frac{P_{st} \cdot A_o - P_z \cdot A_z - F_{offset} - F_z}{A_u}$$

im Abluftbetrieb:

$$P_a = \frac{P_{st} \cdot A_o - F_{offset}}{A_u}$$

Bei gleichem Steuerdruck ist der Ausgangsdruck im Zuluftbetrieb also gegenüber dem Abluftbetrieb vermindert. Die Minderung hängt vom Querschnitt $A_z$ des Zuluftsitzes 150, der Stärke der Zusatzfeder und vom Zuluftdruck $P_z$ ab. Nimmt man für die Abhängigkeit des Ausgangsdrucks $P_a$ vom Steuerdruck $P_{st}$ eine Kennlinie auf, ergibt sich somit ein hystereseartiger Verlauf.

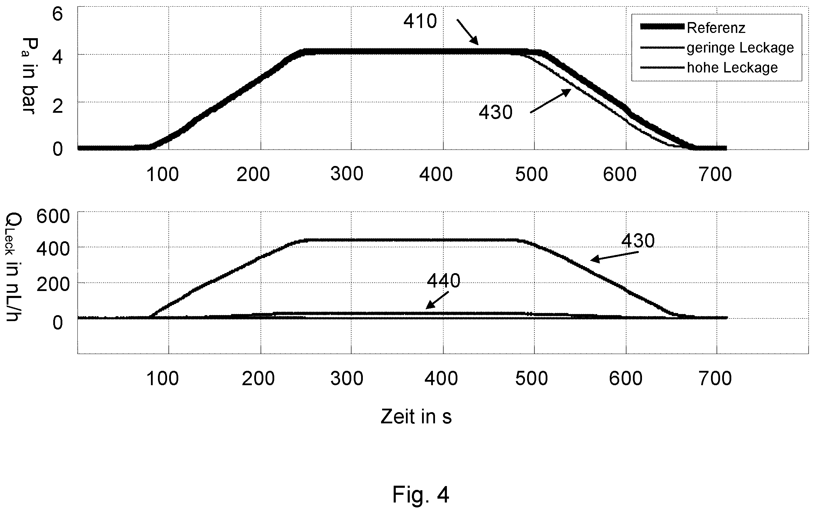

Um eine solche Kennlinie zu erhalten, kann eine Testfunktion mit einem Verlauf, wie er in Fig. 4 dargestellt ist, verwendet werden. Mit der Steuerung wird eine langsame Aufwärts-Rampe der Eingangsgröße gefahren, und nach einer gewissen Zeit wird eine ebenso langsame Abwärts-Rampe gefahren. Im oberen Bereich von Fig. 4 ist das zugehörige Verhalten des Ausgangsdrucks zu erkennen. Die dicke Linie 410 zeigt das Referenzverhalten ohne Leckage, während die dünne Linie 420 das Verhalten bei einer starken Leckage (typischer Leckagestrom einige hundert nL/h - nL sind Normliter) wiedergibt. Bei einer vergleichsweise geringfügigen Leckage von z.B. unter 50 nL/h ergibt sich hingegen eine Kurve, die in dieser Darstellung vom Referenzverhalten nicht zu unterscheiden ist. Es zeigt sich, dass sich das Verhalten im Wesentlichen bei der Abwärts-Rampe unterscheidet. Im unteren Bereich von Fig. 4 sind die zugehörigen Leckageströme $Q_{Leck}$ für eine starke Leckage (Kurve 430) sowie für eine geringfügige Leckage (Kurve 440) aufgetragen.

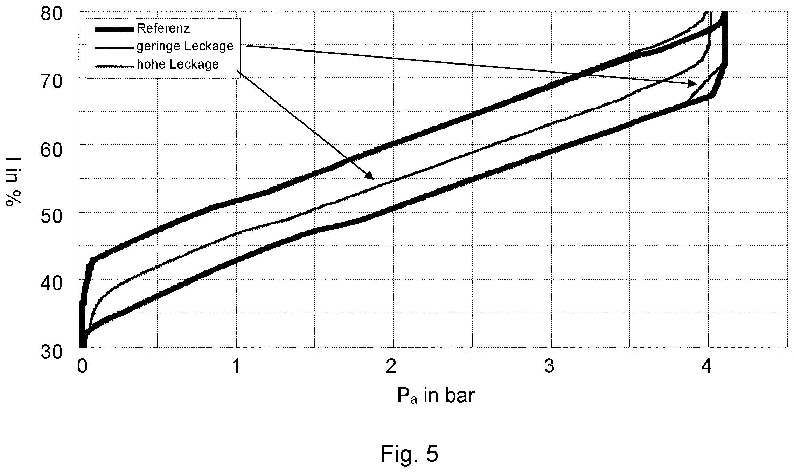

Fig. 5 zeigt entsprechende Kennlinien eines Doppelkegel-Luftleistungsverstärkers, vorzugsweise mit vorgeschaltetem I/P-Wandler nach dem Düse-Prallplatte-Prinzip. Dies entspricht der Konfiguration, wie sie z.B. zur Druckluftsteuerung eines Stellventils mit pneumatischen Antrieb in der Praxis vielfach verwendet wird. Als Eingangsgröße wird hierbei der Strom des I/P-Wandlers betrachtet, als Ausgangsgröße dient der Ausgangsdruck des Luftleistungsverstärkers. Die Eingangsgröße $I$ ist in dieser Darstellung auf der y-Achse in % aufgetragen, die Ausgangsgröße $P_a$ auf der x-Achse in bar. Sowohl der Doppelkegel-Luftleistungsverstärker als auch der I/P-Wandler zeigen ein hystereseartiges Verhalten, was in der Zusammenschau den Verlauf der dick dargestellten Referenzkurve ergibt. Dabei entspricht der obere bzw. linke Ast dem Zuluftbetrieb, der untere bzw. rechte Ast hingegen dem Abluftbetrieb. Wie bereits erklärt, ist der Ausgangsdruck im Zuluftbetrieb bei gleicher Stromstärke gegenüber dem Abluftbetrieb vermindert. Das Verhalten bei einer geringen Leckage unterscheidet sich nur geringfügig von der Referenzkurve. Bei einer größeren Leckage hingegen verschiebt sich der gesamte Ast für den Abluftbetrieb nach oben bzw. nach links, was bedeutet, dass bei vorgegebener Stromstärke der Druck gegenüber dem Referenzverlauf abgesenkt ist. Das vorliegende Verfahren macht sich diese Verhaltensänderungen zu nutze. Dabei wird initial eine solche Referenzkurve aufgenommen und abgespeichert.

Im laufenden Betrieb werden dann stationäre Zustände ermittelt, also Zustände, bei denen sowohl die Eingangsgröße als auch die Ausgangsgröße innerhalb einer vorgegebenen Zeitspanne sich maximal um eine vorgegebene Toleranz ändern, z.B. innerhalb von 5 Sekunden nur um maximal 10 mbar.

Wird ein solcher stationärer Zustand (auch als Arbeitspunkt bezeichnet) erkannt, erfolgt eine genauere Untersuchung. Dabei wird überprüft, ob der Arbeitspunkt durch einen Belüften- oder Entlüften-Vorgang erreicht wurde. Für die vorgesehene Leckage-Erkennung sind, wie bereits erklärt wurde, nur stationäre Zustände von Interesse, die durch Entlüften erreicht wurden, bei denen sich der Doppelkegel-Luftleistungsverstärker also im Abluftbetrieb befindet. Zu diesem Zweck wird die Druckveränderungsrate, d.h. die erste zeitliche Ableitung des Ausgangsdrucks, betrachtet und beispielsweise mit einem Toleranzband versehen. Als Toleranzband kommt beispielsweise ein Intervall von +/-0,02 bar/s in Frage.

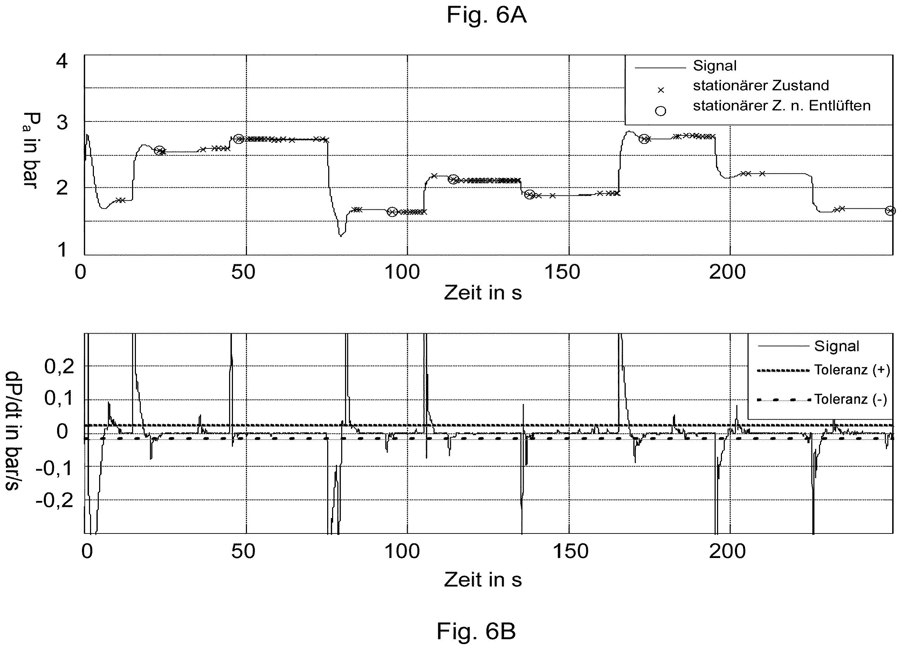

Dies ist für eine simulierte Betriebssituation in Figs. 6A und 6B dargestellt: Fig. 6A zeigt den zeitlichen Verlauf des Ausgangsdrucks, Fig. 6B den zugehörigen zeitlichen Verlauf der ersten zeitlichen Ableitung des Ausgangsdrucks mit dem genannten Toleranzband.

In Fig. 6A sind die erkannten stationären Zustände durch diagonale Kreuze gekennzeichnet. Wenn ein stationärer Zustand in Folge eines Durchdringens des Toleranzbandes in Fig. 6B von oben vorliegt, wurde dieser durch Belüften erreicht und wird somit nicht weiter berücksichtigt. Wenn ein stationärer Zustand hingegen in Folge eines Durchdringens des Toleranzbandes von unten vorliegt (also die Ableitung unmittelbar vorher negativ war), wurde dieser durch Entlüften erreicht.

Diese Arbeitspunkte werden weiter berücksichtigt und sind in Fig. 6A durch Kreise gekennzeichnet. In Fig. 6B ist zu erkennen, dass - zumindest in diesem simulierten Beispiel - auf größere Änderungen bzw. Sprünge häufig eine kleine Korrektur folgt, und dass oft erst direkt nach dieser Korrektur für kurze Zeit geeignete Arbeitspunkte vorliegen.

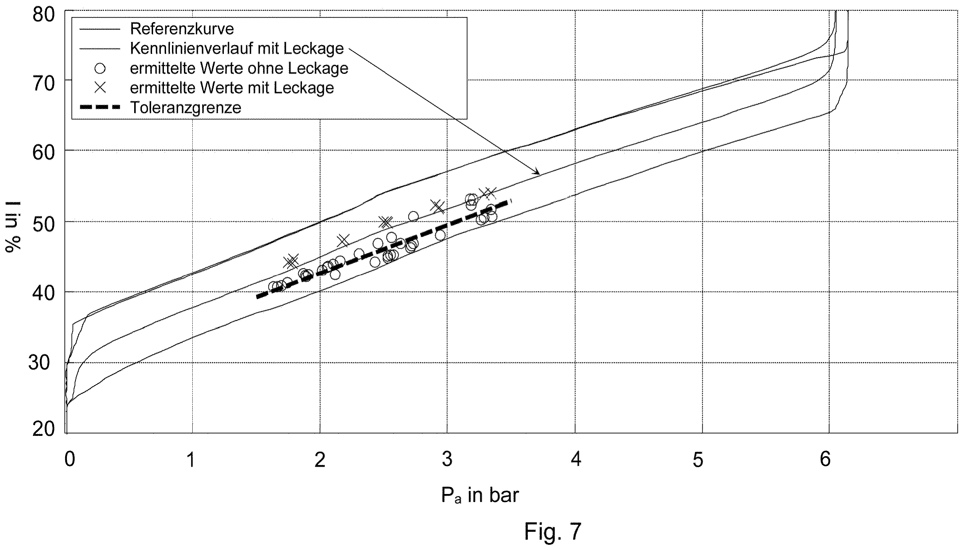

In Fig. 7 ist zu erkennen, wie ermittelte Werte der Eingangs- und Ausgangsgröße, also z.B. der Stromstärke des I/P-Wandlers und des Ausgangsdrucks des Doppelkegel-Luftleistungsverstärkers, die zu den wie beschrieben bestimmten stationären Zuständen gehören, mit der Referenzkurve verglichen werden. Dazu wird eine vorgegebene Toleranzgrenze herangezogen, die in Fig. 7 als fett-gestrichelte Linie dargestellt ist. Diese Toleranzgrenze könnte beispielsweise auf halbem Wege zwischen der Referenzkurve und einem erwarteten Kennlinienverlauf bei einer Leckage, die als gerade nicht mehr akzeptabel eingestuft wird, liegen. Ermittelte Werte, die links von dieser Toleranzgrenze (bzw. äquivalent dazu oberhalb) liegen, deuten auf eine signifikante Leckage hin, da bei diesen Arbeitspunkten zu einer vorgegebenen Stromstärke ein niedrigerer Ausgangsdruck vorliegt, als gemäß der Referenzkurve zu erwarten wäre. Bei Arbeitspunkten, deren zugehörige ermittelte Werte unterhalb bzw. rechts von dieser Toleranzgrenze liegen, kann hingegen keine Leckage erkannt werden.

Um statistische Schwankungen und sonstige Störungen auszugleichen und häufige Fehlalarme bzw. irrtümliche Diagnosen zu vermeiden, wird sinnvollerweise eine größere Menge von Arbeitspunkten betrachtet, und eine konservative Bedingung für die Leckageerkennung gewählt. Bei einem typischen Beispiel können die letzten 30 Arbeitspunkte betrachtet werden. Eine Leckage würde vorzugsweise nur dann erkannt, wenn bei diesen Arbeitspunkten die ermittelten Werte alle ohne Ausnahme oberhalb bzw. links von der Toleranzgrenze liegen.

Glossar

I/P-Wandler

I/P-Wandler sind elektrisch-pneumatische Umformer, die in Abhängigkeit von der Stromstärke eines elektrischen Eingangssignals einen Ausgangsluftdruck erzeugen.

I/P-Wandler nach dem Düse-Prallplatte-Prinzip

I/P-Wandler nach dem Düse-Prallplatte-Prinzip werden beispielsweise in der Druckschrift DE 198 18 336 C1 detailliert beschrieben. Ein solcher Umformer bzw. Wandler weist eine Spule, ein Magnetjoch und einen als Prallplatte ausgebildeten drehbeweglichen Anker auf. Durch die Prallplatte kann eine Auslassdüse verschlossen und wieder freigegeben werden, wobei dies abhängig von dem resultierenden Drehmoment aufgrund der die Prallplatte abstoßenden pneumatischen Kraft und der den Anker anziehenden magnetischen Kraft geschieht. Das System wird zudem mit Druckluft versorgt. Durch das Öffnen bzw. Verschließen der Auslassdüse in Abhängigkeit von der Stromstärke durch die Spule, die die magnetische Kraft bewirkt, wird ein Ausgangsluftdruck eingestellt, der der Stromstärke proportional ist.

Normliter

Das Normvolumen (insbesondere Normkubikmeter, Normliter usw.) ist eine in der Pneumatik, Verfahrens- und Gastechnik gebräuchliche Volumenmaßeinheit. Sie wird benutzt, um Gasmengen, die bei unterschiedlichen Drücken und Temperaturen vorliegen (Betriebszustand, Betriebsvolumen), zu vergleichen. Dazu werden die Gasmengen jeweils auf den gleichen Normzustand umgerechnet, z.B. 0° C und 1 atm. (Nach https://de.wikipedia.org/wiki/Normvolumen)

Stationärer Zustand

Unter einem stationären Zustand wird hier ein Zustand des Doppelkegel-Luftleistungsverstärkers verstanden, bei dem sowohl die Eingangsgröße als auch die Ausgangsgröße innerhalb einer vorgegebenen Zeitspanne sich maximal um eine vorgegebene Toleranz ändern. Dabei ist die Eingangsgröße eine Größe, die einen Ausgangsdruck des Doppelkegel-Luftleistungsverstärkers steuert, z.B. der Steuerdruck des Luftleistungsverstärkers, oder auch eine Stromstärke, falls ein I/P-Wandler vorgeschaltet ist. Die Ausgangsgröße ist der Ausgangsdruck des Doppelkegel-Luftleistungsverstärkers oder eine von dem Ausgangsdruck gesteuerte oder abgeleitete Größe, z.B. die Position des Ventilglieds, wenn der Luftleistungsverstärker einen pneumatischen Ventilantrieb mit Druckluft versorgt.

Bezugszeichen

| 100, 200, 500 | Doppelkegel-Luftleistungsverstärker |
| 105 | Steuereingang |
| 110 | Zulufteingang |
| 115 | Entlüftungsausgang |
| 120 | Ausgang |
| 125 | erste Membran |
| 130 | zweite Membran |
| 135 | Steuerkörper |
| 140 | Abluftsitz |
| 145 | Abluftkegel |
| 150 | Zuluftsitz |
| 155 | Zuluftkegel |
| 160 | Doppelkegel |
| 165 | Zusatzfeder |
| 170 | Offsetfeder |
| 175 | Untere Wirkfläche des Doppelkegels |
| 410 | Referenz-Ausgangsdruckkurve bei Testfunktion |
| 420 | Ausgangsdruckkurve bei Testfunktion mit starker Leckage |
| 430 | Leckagestromkurve bei Testfunktion (starke Leckage) |
| 440 | Leckagestromkurve bei Testfunktion (geringe Leckage) |

zitierte Literatur

zitierte Patentliteratur
DE 37 41 364 A1
DE 198 18 336 C1
EP 1 769 159 B1
US 4,157,656 A
US 2003/0208305 A1
WO 2018/035181 A1

**Patentansprüche**

1. Verfahren zum Erkennen von ausgangsseitigen Leckagen bei einem Doppelkegel-Luftleistungsverstärker (100; 200) mit folgenden Schritten:

   1.1 initiales Aufnehmen einer Referenzkurve, die eine Eingangsgröße mit einer Ausgangsgröße in Relation setzt;
   1.1.1 wobei die Eingangsgröße eine Größe ist, die einen Ausgangsdruck des Doppelkegel-Luftleistungsverstärkers (100; 200) steuert;
   1.1.2 wobei die Ausgangsgröße der Ausgangsdruck des Doppelkegel-Luftleistungsverstärkers (100; 200) oder eine von dem Ausgangsdruck gesteuerte oder abgeleitete Größe ist;
   1.2 Ermitteln mindestens eines stationären Zustands im laufenden Betrieb;
   1.2.1 wobei nur stationäre Zustände betrachtet werden, denen ein Absinken des Ausgangsdrucks des Doppelkegel-Luftleistungsverstärkers (100; 200) vorausgegangen ist;
   1.3 Ermitteln von Werten der Eingangsgröße und der Ausgangsgröße, die zu dem stationären Zustand gehören;
   1.4 Vergleichen der ermittelten Werte mit der Referenzkurve;
   1.5 Feststellen einer ausgangsseitigen Leckage, wenn der zur ermittelten Ausgangsgröße korrespondierende Ausgangsdruck um eine vorgegebene Toleranz kleiner ist als der gemäß der Referenzkurve für die ermittelte Eingangsgröße zu erwartende Ausgangsdruck.

2. Verfahren nach dem vorhergehenden Anspruch, **dadurch gekennzeichnet,**

   2.1 dass eine Mehrzahl von stationären Zuständen ermittelt wird;

2.2 dass für jeden dieser stationären Zustände Werte der Eingangsgröße und der Ausgangsgröße ermittelt werden; und

2.3 dass alle diese ermittelten Werte mit der Referenzkurve verglichen werden.

3. Verfahren nach dem unmittelbar vorhergehenden Anspruch,
   **dadurch gekennzeichnet,**
   **dass** eine ausgangsseitige Leckage festgestellt wird, wenn während einer vorgegebenen Messzeit alle zu den ermittelten Ausgangsgrößen korrespondierenden Ausgangsdrücke um eine vorgegebene Toleranz kleiner sind als die gemäß der Referenzkurve für die ermittelten Eingangsgrößen zu erwartenden Ausgangsdrücke.

4. Verfahren nach Anspruch 2,
   **dadurch gekennzeichnet,**
   **dass** eine ausgangsseitige Leckage festgestellt wird, wenn für eine vorgegebene Anzahl zuletzt ermittelter Ausgangsgrößen die zu den ermittelten Ausgangsgrößen korrespondierenden Ausgangsdrücke um eine vorgegebene Toleranz kleiner sind als die gemäß der Referenzkurve für die ermittelten Eingangsgrößen zu erwartenden Ausgangsdrücke.

5. Verfahren nach einem der vorhergehenden Ansprüche,
   mit dem weiteren Schritt des Erstellens eines Datenträgers, auf dem die ermittelten Werte und/oder Ergebnisse und/oder die Referenzkurve gespeichert sind.

6. Vorrichtung, welche eingerichtet ist, das Verfahren nach einem der vorhergehenden Ansprüche durchzuführen.

7. System zum Erkennen von ausgangsseitigen Leckagen bei einem Doppelkegel-Luftleistungsverstärker (100; 200), umfassend

   7.1 einen Doppelkegel-Luftleistungsverstärker (100; 200);
   7.2 eine Steuerung und/oder Regelung zum Steuern und/oder Regeln einer Eingangsgröße des Doppelkegel-Luftleistungsverstärkers (100; 200);
   7.2.1 wobei die Eingangsgröße eine Größe ist, die einen Ausgangsdruck des Doppelkegel-Luftleistungsverstärkers (100; 200) steuert; und mit
   7.3 Mitteln zum Ermitteln eines stationären Zustands;
   7.4 Mitteln zum Aufnehmen der Eingangsgröße und einer Ausgangsgröße;
   7.4.1 wobei die Ausgangsgröße der Ausgangsdruck des Doppelkegel-Luftleistungsverstärkers (100; 200) oder eine von dem Ausgangsdruck gesteuerte oder abgeleitete Größe ist;
   7.5 Mitteln zum Aufnehmen einer Referenzkurve, die die Eingangsgröße mit der Ausgangsgröße in Relation setzt;
   7.6 Mitteln zum Vergleichen aufgenommener Werte mit der Referenzkurve; und mit
   7.7 Mitteln, die eingerichtet sind, die Schritte des Verfahrens nach einem der Ansprüche 1 bis 5 auszuführen.

8. System nach dem unmittelbar vorhergehenden Anspruch,
   **dadurch gekennzeichnet,**

   8.1 dass das System einen I/P-Wandler umfasst,
   8.1.1 wobei der I/P-Wandler einen Steuerdruck für den Doppelkegel-Luftleistungsverstärker (100; 200) bereitstellt; und
   8.1.2 wobei die Eingangsgröße die durch den I/P-Wandler fließende Stromstärke ist.

9. System nach dem unmittelbar vorhergehenden Anspruch,
   **dadurch gekennzeichnet,**
   **dass** der I/P-Wandler nach dem Düse-Prallplatte-Prinzip aufgebaut ist.

10. Stellungsregler für ein pneumatisch angetriebenes Stellventil mit einem System nach einem der Ansprüche 7 bis 9.

11. Pneumatisch angetriebenes Stellventil mit einem Stellungsregler nach dem unmittelbar vorhergehenden Anspruch.

12. Prozesstechnische Anlage mit mindestens einem pneumatisch angetriebenen Stellventil nach dem unmittelbar vorhergehenden Anspruch.

13. Computerprogramm, umfassend Befehle, die bewirken, dass die Vorrichtung des Anspruchs 6 oder das System nach einem der Ansprüche 7 bis 9 oder der Stellungsregler des Anspruchs 10 die Verfahrensschritte nach einem der Ansprüche 1 bis 5 ausführt.

14. Computerlesbares Medium, auf dem das Computerprogramm nach dem unmittelbar vorhergehenden Anspruch gespeichert ist.

**Claims**

1. Method for detecting outlet-side leaks in a double-cone air power amplifier (100; 200), comprising the following steps:

1.1 initially recording a reference curve relating an input variable to an output variable;

1.1.1 wherein the input variable is a variable that controls an outlet pressure of the double-cone air power amplifier (100; 200);

1.1.2 wherein the output variable is the outlet pressure of the double-cone air power amplifier (100; 200) or a variable controlled by or derived from the outlet pressure;

1.2 determining at least one stationary state during operation;

1.2.1 wherein only stationary states are considered which were preceded by a drop in the outlet pressure of the double-cone air power amplifier (100; 200);

1.3 determining values for the input and output variables, which values correspond to the stationary state;

1.4 comparing the determined values with the reference curve;

1.5 identifying an outlet-side leak if the outlet pressure corresponding to the determined output variable is lower by a specified tolerance than the outlet pressure expected according to the reference curve for the determined input variable.

2. Method according to the preceding claim, **characterized in that**

2.1 a plurality of stationary states are determined;

2.2 for each of these stationary states, values for the input and output variables are determined; and

2.3 these determined values are all compared with the reference curve.

3. Method according to the immediately preceding claim, **characterized in that** an outlet-side leak is identified if, during a specified measuring time, all output pressures corresponding to the determined output variables are lower by a specified tolerance than the output pressures expected according to the reference curve for the determined input variables.

4. Method according to claim 2, **characterized in that** an outlet-side leak is identified if, for a specified number of recently determined output variables, the output pressures corresponding to the determined output variables are lower by a specified tolerance than the output pressures expected according to the reference curve for the determined input variables.

5. Method according to any of the preceding claims, comprising the further step of creating a data carrier on which the determined values and/or results and/or the reference curve are stored.

6. Device configured to carry out the method according to any of the preceding claims.

7. System for detecting outlet-side leaks in a double-cone air power amplifier (100; 200), comprising:

7.1 a double-cone air power amplifier (100; 200);

7.2 a controller and/or regulating mechanism for controlling and/or regulating an input variable of the double-cone air power amplifier (100; 200);

7.2.1 wherein the input variable is a variable that controls an outlet pressure of the double-cone air power amplifier (100; 200); and comprising

7.3 means for determining a stationary state;

7.4 means for receiving the input variable and an output variable;

7.4.1 wherein the output variable is the outlet pressure of the double-cone air power amplifier (100; 200) or a variable controlled by or derived from the outlet pressure;

7.5 means for recording a reference curve which relates the input variable to the output variable;

7.6 means for comparing recorded values with the reference curve; and comprising

7.7 means configured to perform the steps of the method according to any of claims 1 to 5.

8. System according to the immediately preceding claim, **characterized in that**

8.1 the system comprises an I/P converter,

8.1.1 the I/P converter providing a control pressure for the double-cone air power amplifier (100; 200); and

8.1.2 the input variable being the current flowing through the I/P converter.

9. System according to the immediately preceding claim, **characterized in that** the I/P converter is constructed according to the nozzle-baffle principle.

10. Positioner for a pneumatically driven control valve, comprising a system according to any of claims 7 to 9.

11. Pneumatically driven control valve comprising a positioner according to the immediately preceding claim.

**12.** Processing plant comprising at least one pneumatically driven control valve according to the immediately preceding claim.

**13.** Computer program comprising instructions which cause the device of claim 6 or the system according to any of claims 7 to 9 or the positioner of claim 10 to perform the method steps according to any of claims 1 to 5.

**14.** Computer-readable medium on which the computer program according to the immediately preceding claim is stored.

**Revendications**

**1.** Procédé pour la détection de fuites côté sortie dans un surpresseur d'air à double cône (100 ; 200), comportant les étapes suivantes :

1.1 enregistrement initial d'une courbe de référence qui met en relation une grandeur d'entrée et une grandeur de sortie ;
1.1.1 dans lequel la grandeur d'entrée est une grandeur qui commande une pression de sortie du surpresseur d'air à double cône (100 ; 200) ;
1.1.2 dans lequel la grandeur de sortie est la pression de sortie du surpresseur d'air à double cône (100 ; 200) ou une grandeur commandée ou déduite de la pression de sortie ;
1.2 détermination d'au moins un état stationnaire en cours de fonctionnement ;
1.2.1 dans lequel sont considérés uniquement les états stationnaires précédés d'une baisse de la pression de sortie du surpresseur d'air à double cône (100 ; 200) ;
1.3 détermination de valeurs de la grandeur d'entrée et de la grandeur de sortie qui appartiennent à l'état stationnaire ;
1.4 comparaison des valeurs déterminées avec la courbe de référence ;
1.5 constatation d'une fuite côté sortie lorsque la pression de sortie correspondant à la grandeur de sortie déterminée est inférieure d'une tolérance prédéfinie à la pression de sortie attendue selon la courbe de référence pour la grandeur d'entrée déterminée.

**2.** Procédé selon la revendication précédente, **caractérisé en ce**

2.1 **qu'**une pluralité d'états stationnaires est déterminée ;
2.2 **que,** pour chacun desdits états stationnaires, des valeurs de la grandeur d'entrée et de la grandeur de sortie sont déterminées ; et
2.3 **que** toutes lesdites valeurs déterminées sont comparées avec la courbe de référence.

**3.** Procédé selon la revendication immédiatement précédente,
**caractérisé en ce**
**qu'**une fuite côté sortie est constatée lorsque, pendant un temps de mesure prédéfini, toutes les pressions de sortie correspondant aux grandeurs de sortie déterminées sont inférieures d'une tolérance prédéfinie aux pressions de sortie attendues selon la courbe de référence pour les grandeurs d'entrée déterminées.

**4.** Procédé selon la revendication 2,
**caractérisé en ce**
**qu'**une fuite côté sortie est constatée lorsque, pour un nombre prédéfini de grandeurs de sortie déterminées en dernier lieu, les pressions de sortie correspondant aux grandeurs de sortie déterminées sont inférieures d'une tolérance prédéfinie aux pressions de sortie attendues selon la courbe de référence pour les grandeurs d'entrée déterminées.

**5.** Procédé selon l'une des revendications précédentes,
comportant l'étape supplémentaire de création d'un support de données sur lequel sont enregistrés les valeurs déterminées et/ou les résultats et/ou la courbe de référence.

**6.** Dispositif configuré pour mettre en œuvre le procédé selon l'une des revendications précédentes.

**7.** Système pour la détection de fuites côté sortie d'un surpresseur d'air à double cône (100 ; 200), comprenant

7.1 un surpresseur d'air à double cône (100 ; 200) ;
7.2 une commande et/ou une régulation pour la commande et/ou la régulation d'une grandeur d'entrée du surpresseur d'air à double cône (100 ; 200) ;
7.2.1 dans lequel la grandeur d'entrée est une grandeur qui commande une pression de sortie du surpresseur d'air à double cône (100 ; 200) ; et comportant
7.3 des moyens permettant de déterminer un état stationnaire ;
7.4 des moyens permettant d'enregistrer la grandeur d'entrée et une grandeur de sortie ;
7.4.1 dans lequel la grandeur de sortie est la pression de sortie du surpresseur d'air à double cône (100 ; 200) ou une grandeur commandée ou déduite de la pression de sortie ;
7.5 des moyens permettant d'enregistrer une courbe de référence qui met en relation la grandeur d'entrée et la grandeur de sortie ;

7.6 des moyens permettant de comparer des valeurs enregistrées avec la courbe de référence ; et comportant

7.7 des moyens configurés pour mettre en œuvre les étapes du procédé selon l'une des revendications 1 à 5.

8. Système selon la revendication immédiatement précédente,
**caractérisé en ce**

8.1 **que** le système comprend un convertisseur I/P,

8.1.1 dans lequel le convertisseur I/P fournit une pression de commande pour le surpresseur d'air à double cône (100 ; 200) ; et

8.1.2 dans lequel la grandeur d'entrée est l'intensité de courant traversant le convertisseur I/P.

9. Système selon la revendication immédiatement précédente,
**caractérisé en ce**
**que** le convertisseur I/P est construit selon le principe buse-palette.

10. Positionneur pour une soupape de réglage à actionnement pneumatique comportant un système selon l'une des revendications 7 à 9.

11. Soupape de réglage à commande pneumatique comportant un positionneur selon la revendication immédiatement précédente.

12. Installation de technique de processus comportant au moins une soupape de réglage à commande pneumatique selon la revendication immédiatement précédente.

13. Programme informatique comprenant des instructions provoquant le dispositif selon la revendication 6 ou le système selon l'une des revendications 7 à 9 ou le positionneur selon la revendication 10 à exécuter les étapes de procédé selon l'une des revendications 1 à 5.

14. Support lisible par ordinateur sur lequel est stocké le programme informatique selon la revendication immédiatement précédente.

Fig. 1

(Stand der Technik)

Fig. 2

(Stand der Technik)

Fig. 3

(Stand der Technik)

Fig. 4

EP 4 374 150 B1

Fig. 5

EP 4 374 150 B1

Fig. 6A

EP 4 374 150 B1

Fig. 6B

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1769159 B1
- DE 3741364 A1
- WO 2018035181 A1
- US 4157656 A
- US 20030208305 A1
- JP S55115603 A
- DE 19818336 C1